# EUROPEAN PATENT APPLICATION

(11) **EP 2 452 871 A1**
(43) Date of publication of application: **16.05.2012**
(21) Application number: 09847061.0
(22) Date of filing: 07.07.2009
(51) Int. Cl.: B63H 23/36, F16J 15/16

(54) **SEAL DEVICE AND METHOD FOR REPLACEMENT OF SEAL FOR PROPELLER SHAFT OF MARINE VESSEL**

(71) Applicant: Wartsila Japan Ltd., Hyogo 650-0045 (JP)
(72) Inventor: DINGEMANS, Michel, NL-5151RP Drunen (NL); YOTSUYANAGI, Masahiko, Toyama-shi Toyama 930-0916 (JP); INABA, Motofumi, Toyama-shi Toyama 930-0916 (JP); TAKAYASU, Minoru, Toyama-shi Toyama 930-0916 (JP)
(74) Representative: Richards, John
(86) International application number: PCT/JP2009/062363
(87) International publication number: WO 2011/004456

(57) **Abstract**

An objective of the present invention is to supply a seal apparatus which simplifies operation for replacing seal rings provided on a stem tube. The present invention relates to a seal apparatus for a shaft of a marine vessel comprising a seal ring arranged in contact with a seal liner provided around the shaft, an annular hollow case arranged in coaxial to the shaft, and a spare seal ring stored in the annular hollow case and arranged in coaxial to the shaft.

## Description

The present invention relates to a seal apparatus for a propulsion shaft of a marine vessel.

Conventionally, seal rings are used in a seal apparatus for a propulsion shaft of a marine vessel. The seal rings are replaced during a periodical inspection or in an emergency so as to cope with troubles such as accidental seawater ingress and oil leakage. In case of the replacement of the seal rings during a periodical inspection, a propulsion shaft is pulled out of a stem tube, and forward and aft seal apparatuses are removed and carried to a factory to be disassembled and reassembled. In recent years, however, there is a tendency that a shaft pull-out is dispensed within a periodical inspection. Since a shaft is not pulled out over a long term, opportunities to replace the seal rings are reduced. On the other hand, there is another method for replacing a seal ring by removing only a propeller without pulling out a shaft and by carrying an aft seal apparatus in a factory. There is also another method (bonding method) for replacing a seal ring by opening forward and aft seal apparatuses installed on a propulsion shaft without removing even a propeller and by cutting and bonding a seal ring. In addition, such bonding method for replacing a seal ring without pulling out a shaft is used also in case of accidental troubles. However, such methods require much time and effort, much cost, and special techniques.

Also, some stem-tube seal apparatuses for a propulsion shaft of a marine vessel have standby seal rings 51 in the seal apparatuses as disclosed in Japanese Patent Application No. 49-135694 (JP-A-51-61986) (see Fig. 11), and some have no standby seal rings. Here, standby seal rings are mostly arranged on the oil side for the purpose of prevention of marine pollution (penalties such as severe fines will be imposed on someone who leaks an oil outboard in a port or the like). The standby seal rings are held by a seal casing in the same manner as ordinary seal rings. Also, front and back surfaces of the standby seal ring are immersed in oil and oil pressures in compartments on the sides of front and back surfaces of the seal ring are balanced to the same pressure to decrease a load on the seal ring. Even when the front and back surfaces are balanced to the same pressure, a seal ring actually contact with and slide on a sliding member at all times because of constricting forces of the seal ring and a spring (forces for constricting the sliding member). Also, in other method, oil is forced to flow from a back side to a front side of a seal ring to decrease a load caused by constricting forces of the seal ring and a spring. In this case, however, the seal ring unavoidably contacts with and slides on a sliding member in an intermittent manner. As for a seal system in which front and back surfaces of an seal ring are controlled in the same pressure, if oil leakages occur due to damage to the seal ring or the like, valves provided at inlet and outlet ports of a piping line on a back surface side of a spare seal ring are closed to allow pressure acted only on a front surface side, then the spare seal ring is actuated to prevent the oil leakage. On the other hand, as for a seal system in which an oil is forced to flow from a back side to a front side, a valve provided on an inlet side of a piping line is closed to allow oil pressure acted only on a front side of a spare seal ring, whereby oil leakage is prevented. While the spare seal ring is provided on an oil side, no appropriate means is provided on a seawater side for the provision of a spare seal ring. Accordingly, it is difficult to cope with the case of damage, so that replacement to a new seal ring is required in dock or on the sea.

As described above, in the case where a seal ring in a stem-tube seal apparatus for a propulsion shaft is replaced by pulling out a shaft in dock and removing a seal apparatus, much effort and cost are required for an arrangement of a dock, personnel expense, and working hour etc. Also, in the case where a method is applied of lifting a propeller portion of a stem above a sea surface, opening a seal apparatus on a propulsion shaft, once cutting a new seal ring, and then bonding the seal ring, only an engineer having a special technical skill for bonding with a special jig can do the work, while no dock is required. Further, the method of once cutting and then bonding is inferior in reliability compared to a method of making a replacement without cutting a seal ring, and cannot eliminate the possibility of cracking of a bonded portion and oil leakage in service. Also, much time and effort are required in bonding of a seal ring. It is an object of the invention to provide an apparatus for simplifying these works.

Accordingly the invention provides a seal apparatus for a shaft of a marine vessel, comprising a seal ring arranged in contact with a seal liner provided around the shaft, an annular hollow case arranged in coaxial to the shaft, and a spare seal ring stored in the annular hollow case and arranged in coaxial to the shaft.

The annular hollow case in the invention comprises not less than two case members.

The invention provides a marine vessel provided with the seal apparatus having the above construction.

Furthermore the invention also provides a method of replacing seals utilizing the seal apparatus, comprising dismounting the seal ring from the seal apparatus, taking the spare seal ring out of the annular hollow case, around the shaft, and mounting the spare seal ring at a predetermined location.

With the seal apparatus according to the invention, in the case where oil leakage occurs due to troubles in the seal apparatus, it is possible to replace the seal apparatus without preparing for new parts and making repairs in dock. That is, it is possible to accomplish an adjustment of ballast in a port or the like immediately to lift a stem above a- sea surface, disassemble a seal apparatus around a shaft, take out a spare seal ring from an annular hollow case, and mount it simply. Accordingly, as compared with a cutting and bonding method (bonding method), which requires a work of pulling out a shaft and a special technical skill, a seal ring can be replaced with new one in a short period of time. Further, since it is possible to rapidly cope with troubles such as oil leakage, an expansion of marine pollution caused by a prolonged outboard oil leakage is prevented, and a work related to treatment of outboard oil leakage is reduced.

The invention will be further discussed in the following detailed description and by reference to the accompanying drawings.
Fig. 1 is a cross sectional view showing a first example of a seal apparatus according to the invention.
Fig. 2 is a cross sectional view showing a second example of a seal apparatus according to the invention.
Fig. 3 is a cross sectional view showing a third example of a seal apparatus according to the invention.
Fig. 4 is a cross sectional view showing a fourth example of a seal apparatus according to the invention.
Fig. 5 is a cross sectional view showing a fifth example of a seal apparatus according to the invention.
Fig. 6 is a cross sectional view showing a sixth example of a seal apparatus according to the invention.
Fig. 7 is a cross sectional view showing a seventh example of a seal apparatus according to the invention.
Fig. 8 is a cross sectional view showing an eighth example of a seal apparatus according to the invention.
Fig. 9 is a cross sectional view showing a ninth example of a seal apparatus according to the invention.
Fig. 10 is a cross sectional view showing a tenth example of a seal apparatus according to the invention.

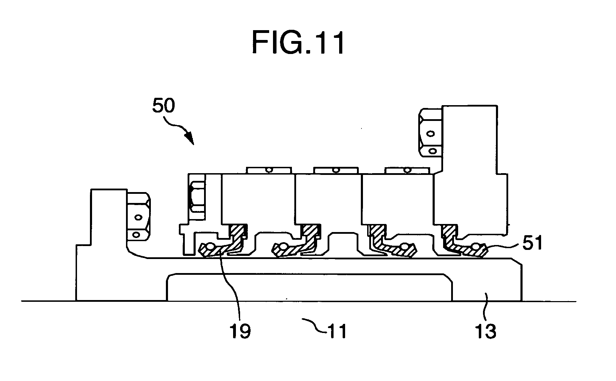

Fig. 11 is a cross sectional view showing a seal apparatus according to the related art.

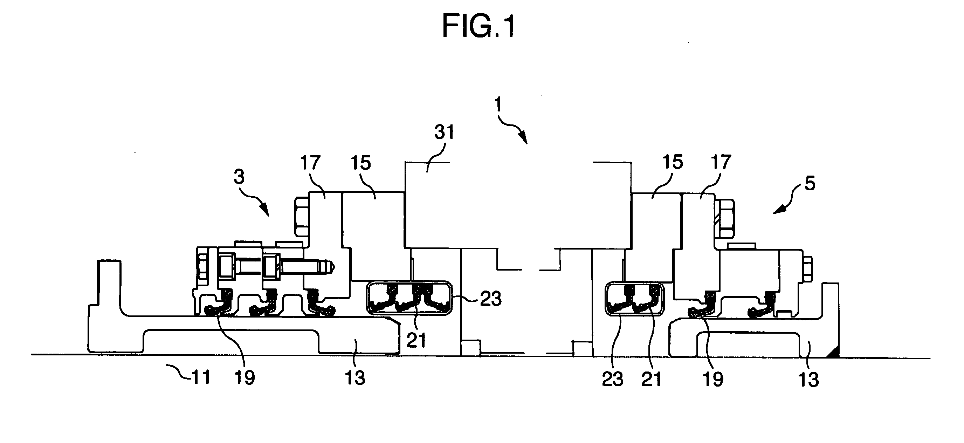

Fig. 1 is a cross sectional view showing a first example of a seal apparatus 1 according to the invention. The seal apparatus 1 includes an aft seal apparatus 3 and a forward seal apparatus 5. According to the embodiment, a spacer ring 15 is provided on a stem tube side of the aft seal apparatus 3 and an annular hollow case 23 is mounted on the spacer ring 15. The annular hollow case 23 includes therein three spare seal rings 21. The spare seal rings 21 are provided in the annular hollow case 23. This can prevent deterioration resulting from contact between the spare seal rings 21 and other members, contamination, or the like and deterioration resulted from contact between the spare seal rings and other liquids, gases, or the like. Further, with a view to preventing contact with contamination, the annular hollow case 23 may be partially or wholly structured to permit passage of gases or liquids therethrough. For example, the annular hollow case 23 may be made of a meshy material, or the annular hollow case 23 may be structured to have smaller holes than a predetermined contamination. While the annular hollow case 23 is of a split type comprising two seal case members, it may comprise three or more seal case members. The spare seal rings comprise an elastic body made of nitrile rubber, fluoro rubber, or the like, and a metallic spring. In addition, the spare seal rings 21 provided in the annular hollow case 23 may comprise only an elastic body provided with no spring. In order to prevent the spare seal rings 21 from contacting with gases, the spare seal rings 21 may be arranged in an airtight film and packed by performing pressure reducing deaeration, then may be provided in the annular hollow case 23.

The seal apparatus according to the invention allows a spare seal ring to be taken out with its shape kept annular without cutting it by removing the seal case member around a propulsion shaft. The annular hollow case 23 is made of a metallic material or a resin material. Also, a slight clearance is provided between the annular hollow case 23 and a seal liner 13 provided on the propulsion shaft to avoid contact with each other even when the shaft rotates. When the seal ring is replaced with the spare seal ring 21, a casing 17, the spacer ring 15, and the annular hollow case 23 are disassembled to take out the seal ring 21, and are reassembled in order from a stem tube side. In addition, the casing 17 and the spacer ring 15 may be shaped to be divided into two parts. At this time, in the case where deep abrasion, scratch, pitting, or the like are found on the seal liner 13 in a sliding portion with the seal ring, the seal rings 21 can be set displaced toward the stem tube to change the sliding position by removing the spacer ring 15 and the annular hollow case 23. It is also possible to fill a liquid or a gas in the annular hollow case 23. Further, spare seal rings provided in the annular hollow case 23 are likewise applied to the forward seal apparatus 5. In addition, while the forward seal apparatus 5 and the aft seal apparatus 3 are combined together in the respective Embodiments, the invention is not limited to the combinations in the respective Embodiments. The forward and aft seal apparatuses in each Embodiments may be combined together.

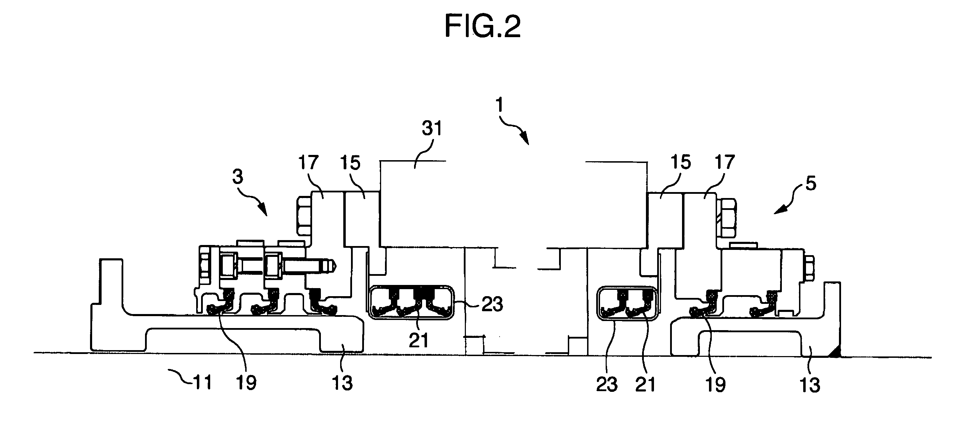

According to Embodiment 2 shown in Fig. 2, a spacer ring 17 is arranged on a stem tube side of an aft seal apparatus 3 and an annular hollow case 23 is mounted on an inside-diameter side of the spacer ring 17 in the same manner as Embodiment 1. On the other hand, according to the Embodiment, the annular hollow case 23 is arranged not on a radially outward side of an aft liner 13 but in a space between the seal liner 13 and a bearing for a stem tube. Also, as for a forward seal apparatus 5, an annular hollow case 23 is arranged in a space between the seal liner 13 and a bearing for the stem tube. In this case, an inside diameter of the annular hollow case 23 may be smaller than a diameter of a sliding portion of the seal liner 13, since the annular hollow case 23 does not contact with the seal liner 13. Therefore, it is possible to make spare seal rings smaller than the diameter of the sliding portion of the seal liner 13. That is, it is possible to provide for spare seal rings having an inside-diameter interference. The same advantageous effect can be also obtained in the following Embodiments 3, 4, and 7 to 10.

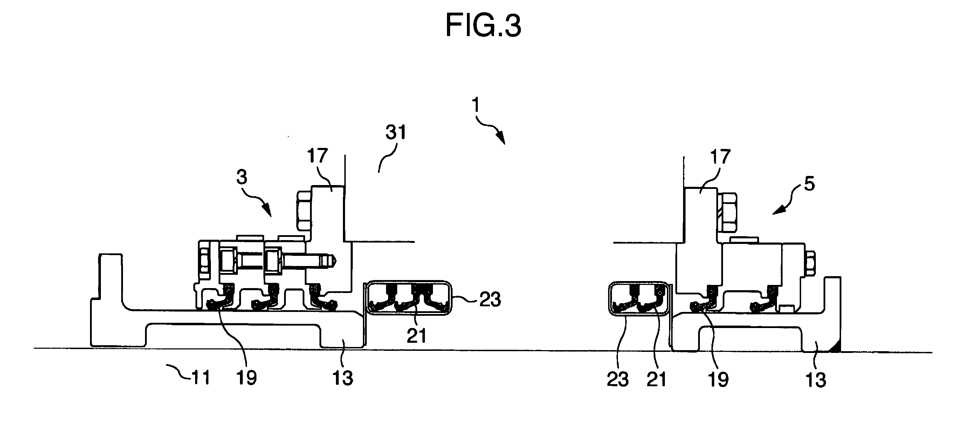

According to Embodiment 3 shown in Fig. 3, an annular hollow case 23 storing spare seal rings 21 is mounted on an end surface of an aft seal liner 13. In this case, the annular hollow case 23 rotates together with the seal liner 13. In addition, an annular hollow case 23 in a forward seal apparatus is mounted on an end surface of a forward seal liner 13.

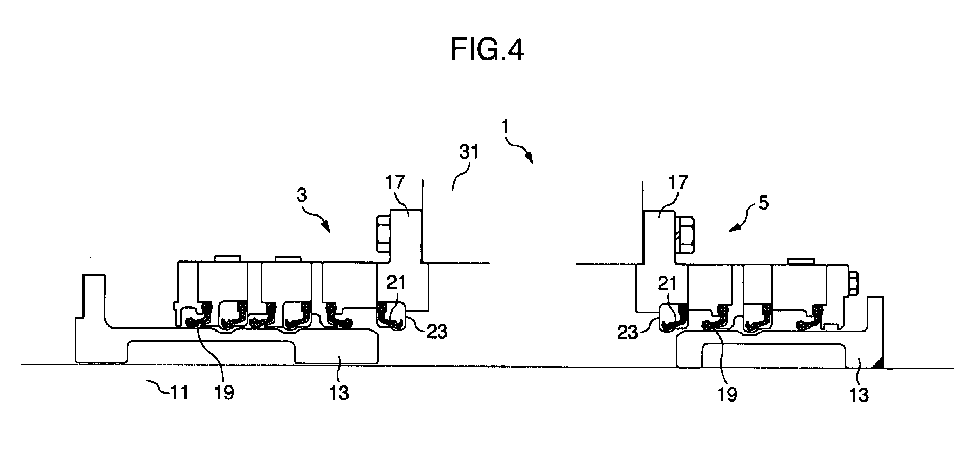

Embodiment 4 shown in Fig. 4 is different from Embodiments 1 to 3 described above. That is, in contrast to the Embodiments described above in which the plurality of spare seal rings 21 are stored in a lump in a single annular hollow case 23, annular hollow cases 23 are provided respectively on back surface sides of each seal rings, and the spare seal rings 21 are stored one by one in annular hollow cases 23. Further, the diameters of a seal liner 13 are decreased at the portions where the spare seal rings 21 are arranged relative to the remaining portions. In addition, the third spare seal ring 21 from a stem side is arranged not on a radial outward side of an aft seal liner 13 but in a space in the stem tube. Also, as for a forward seal apparatus 5, the first spare seal ring 21 from the stem side is arranged not on a radial outward side of a forward seal liner 13 but in a space in the stem tube. When the spare seal rings 21 are replaced in the Embodiment, a casing 17 is disassembled, and the spare seal rings 21 are taken out of the annular hollow cases 23, and assembled in a regular position together with the casing 17.

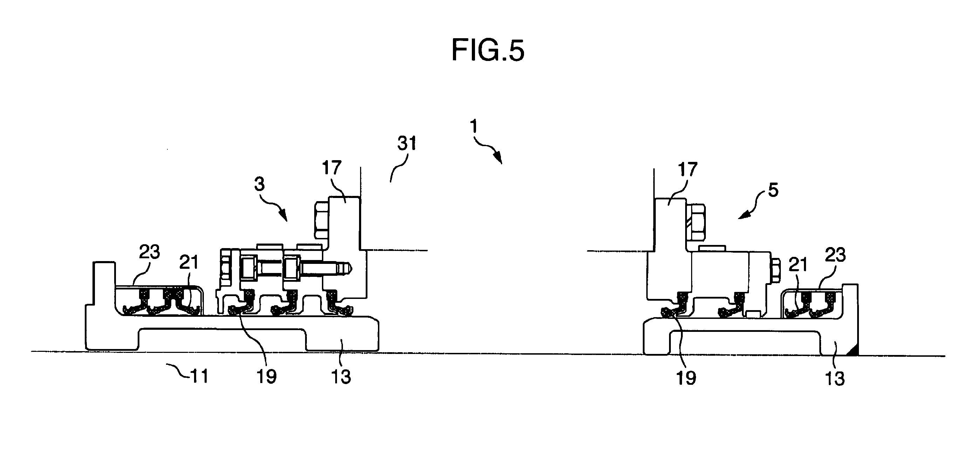

According to Embodiment 5 shown in Fig. 5, spare seal rings 21 are not stored in an inboard side of an aft seal apparatus 3, but stored in an annular hollow case 23 mounted between a flange surface of an aft seal liner 13 and a seawater side of the aft seal apparatus 3. As for a forward seal apparatus 5, spare seal rings are stored in an annular hollow case 23 mounted between a flange surface of a forward seal liner 13 and a seawater side of the forward seal apparatus 3. When the spare seal rings are replaced, a casing 17 is disassembled, and the spare seal rings 21 are taken out of the annular hollow case 23, and assembled in regular positions together with the casing 17 respectively.

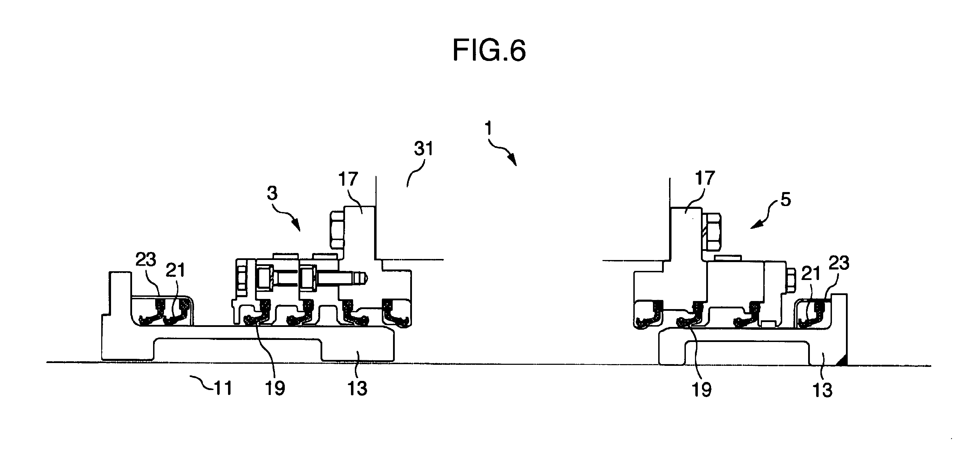

According to Embodiment 6 shown in Fig. 6, as for an aft seal apparatus 3, the first and second spare seal rings 21 from a seawater side of a stem are provided in the same manner as in Embodiment 5 and the third spare seal ring 21 from a stem side is provided in a space in the stem tube in the same manner as in Embodiment 4. On the other hand, as for a forward seal apparatus 5, the first spare seal ring 21 from the stem side is provided in the space in the stem tube and the second spare seal ring 21 from the stem side is provided in the same manner as in Embodiment 5.

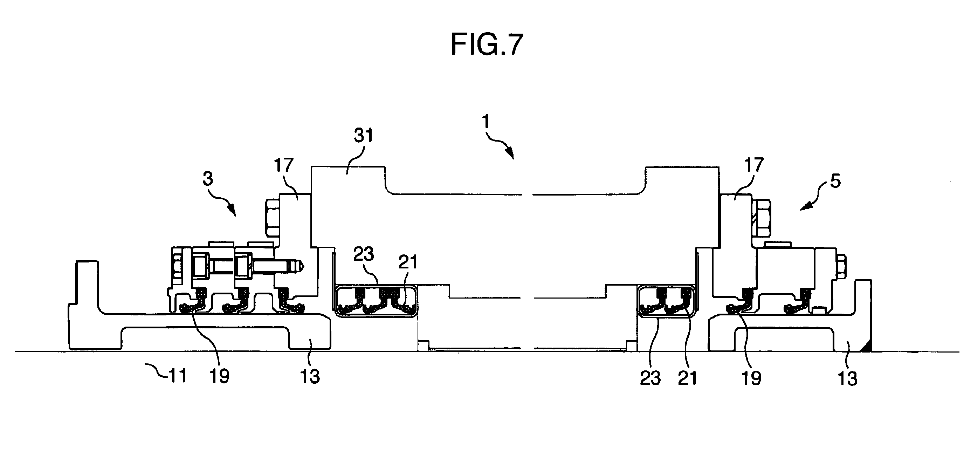

According to Embodiment 7 shown in Fig. 7, an annular hollow case 23 storing therein three spare seal rings 21 is mounted on an end surface of a stem tube in a space between an aft seal apparatus 3 and a bearing for a stem tube. Also, as for a forward seal apparatus 5, an annular hollow case 23 is mounted on the end surface of the stem tube.

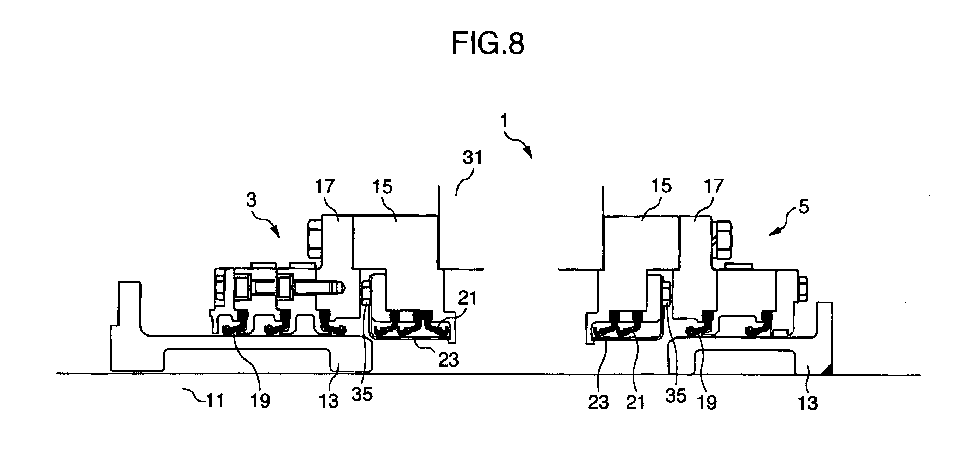

According to Embodiment 8 shown in Fig. 8, a spacer ring 15 is arranged between an aft seal apparatus 3 and a stem tube and three spare seal rings 21 are mounted on the spacer ring 15. The spare seal rings are mounted by means of a bolt 35 from a stem side so as to permit the spare seal rings 21 to be taken out without removing the spacer ring 15. As for a forward seal apparatus 5, spare seal rings are likewise mounted by means of a bolt 35 from a bow side.

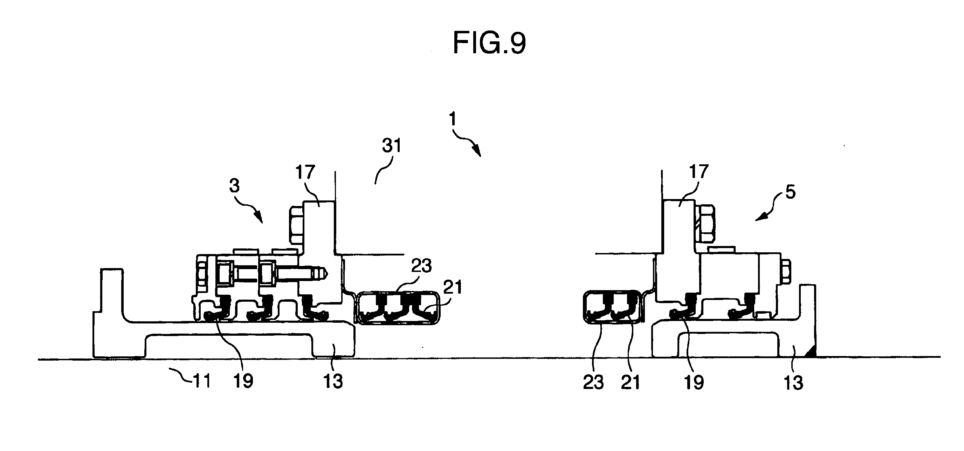

Embodiment 9 shown in Fig. 9 is similar to Embodiments 2 and 7, and an annular hollow case 23 storing therein spare seal rings 21 is mounted on a surface of a casing 17.

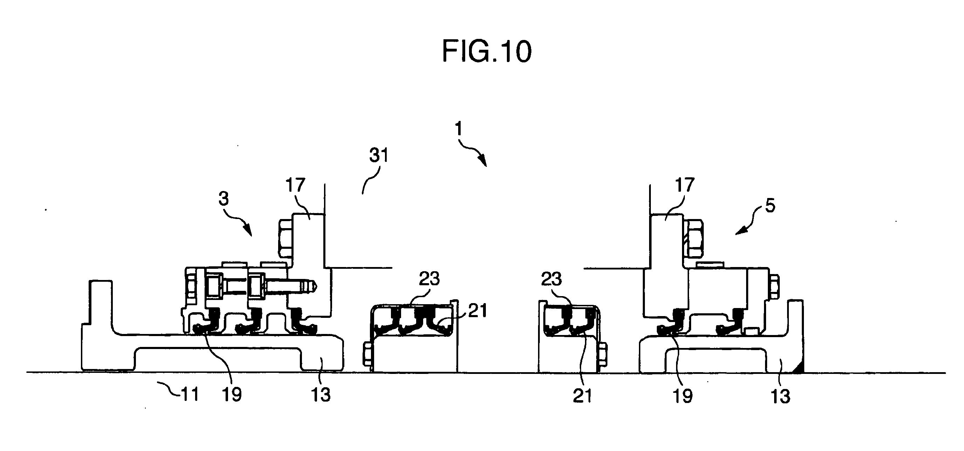

According to Embodiment 10 shown in Fig. 10, annular hollow cases 23 each storing therein spare seal rings 21 are provided directly on a propulsion shaft 11 in a space between a seal apparatus 1 and a bearing for a stem tube.

### DESCRIPTION OF REFERENCE NUMERALS

1: seal apparatus
3: aft seal apparatus
5: forward seal apparatus
11: propulsion shaft
13: seal liner
15: spacer ring
17: casing
19: seal ring
21: spare seal ring
23: annular hollow case
31: stem tube
35: bolt

## Claims

1. A seal apparatus for a shaft of a marine vessel, comprising:
a seal ring arranged in contact with a seal liner provided around the shaft;
an annular hollow case arranged in coaxial to the shaft; and
a spare seal ring stored in the annular hollow case and arranged in coaxial to the shaft.

2. The seal apparatus according to claim 1, wherein the annular hollow case comprising not less than two case members.

3. A marine vessel provided with the seal apparatus according to claim 1 or 2.

4. A method for replacing seals utilizing the seal apparatus according to claim 1 or 2, comprising:
dismounting the seal ring from the seal apparatus;
taking the spare seal ring out of the annular hollow case, around the shaft; and
mounting the spare seal ring at a predetermined location.
